Europäisches Patentamt

European Patent Office

Office européen des brevets

(11) Numéro de publication: **0 210 101**
**B1**

(12) **FASCICULE DE BREVET EUROPEEN**

(45) Date de publication du fascicule du brevet: **23.05.90**

(51) Int. Cl.⁵: **G 01 C 15/04**

(21) Numéro de dépôt: **86401460.0**

(22) Date de dépôt: **01.07.86**

(54) Dispositif de jalonnement des terrains.

(30) Priorité: **09.07.85 FR 8510500**

(43) Date de publication de la demande:
**28.01.87 Bulletin 87/05**

(45) Mention de la délivrance du brevet:
**23.05.90 Bulletin 90/21**

(84) Etats contractants désignés:
**AT BE CH DE FR GB IT LI LU NL SE**

(56) Documents cités:
**EP-A-0 101 757**
**US-A-3 516 171**
**US-A-4 185 424**

(73) Titulaire: **Neaume, Robert**
**Bourpeuil - Le Vigeant**
**F-86150 L'Isle Jourdain (FR)**

(72) Inventeur: **Neaume, Robert**
**Bourpeuil - Le Vigeant**
**F-86150 L'Isle Jourdain (FR)**

(74) Mandataire: **Bressand, Georges et al**
**c/o CABINET LAVOIX 2 Place d'Estienne d'Orves**
**F-75441 Paris Cédex 09 (FR)**

Courier Press, Leamington Spa, England.

## Description

La présente invention concerne un dispositif de jalonnement des terrains et notamment des terrains agricoles.

Ce dispositif est destiné en particulier à permettre la matérialisation sur les terrains agricoles du parcours que doivent emprunter les différents engins agricoles, en particulier pour effectuer des applications d'engrais ou de produits de traitement du sol ou de cultures.

US—A—3 516 171 décrit un dispositif de jalonnement des terrains, comprenant une tige flexible. Ce dispositif de flexibilité uniforme nécessite un outil rigide pour être enfoncé dans le sol.

US—A—4 185 424 décrit un dispositif de marquage destiné à être enfoncé dans le sol. Ce dispositif de section cruciforme possède une rigidité qui croit vers le haut.

Le dispositif de jalonnement des terrains selon la présente invention est constitué d'un piquet de matière plastique souple comprenant une tige qui présente une pointe à son extrémité inférieure et qui se prolonge à sa partie supérieure par une tête de marquage, caractérisé en ce que ladite tige comprend une zone inférieure de section cruciforme dont un premier bras s'étend longitudinalement jusqu'à la tête de marquage, et un second bras qui présente une zone dans laquelle il s'estompe progressivement en direction de la tête de marquage, de sorte que la zone supérieure de la tige est moins rigide que la zone inférieure, la tête de marquage étant sensiblement plane et s'étendant dans le prolongement du premier bras.

Le dispositif selon la présente invention est tel qu'il peut être enfoncé aisément dans le sol tandis que sa partie supérieure peut se plier lors du passage des engins agricoles. De plus, la présence d'une tête de marquage permet de constituer un repère aisément visible pour indiquer le trajet que doivent emprunter les différents engins agricoles.

La tige selon l'invention présente une rigidité satisfaisante à sa partie inférieure et une souplesse importante au voisinage de la tête de marquage.

La tête de marquage a avantageusement une rigidité au plus égale à celle de la zone supérieure de la tige.

La matière plastique qui constitue l'ensemble du piquet peut être notamment une polyoléfine tels que du polyéthylène basse densité, du polyéthylène haute densité ou du polypropylène. Cette polyoléfine peut avoir une densité de 0,90 à 0,96 et une résitance à la traction de $8.10^6$ Pa à $35.10^6$ Pa. En outre cette polyoléfine a avantageusement un point de fragilité n'apparaissant pas avant—70°C selon la norme ASTM D 995-51.

L'invention est exposée ci-après plus en détail à l'aide de dessins représentant seulement un mode d'exécution.

Sur ces dessins,

La Fig. 1 représente un dispositif selon la présente invention

Les Fig. 2, 3 et 4 sont des coupes du disposiitif présenté sur la Fig. 1 à plus grande échelle

La Fig. 5 est une coupe du dispositif représenté sur la Fig. 1.

Le dispositif de jalonnement représenté sur les dessins est réalisé par moulage de polypropylène.

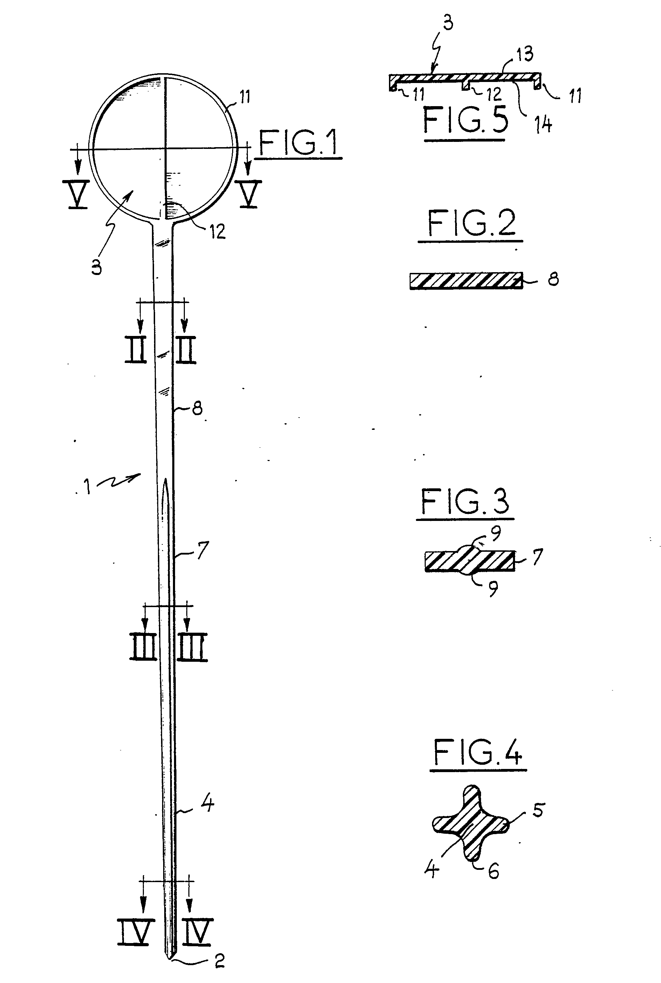

Le dispositif comprend une tige 1 qui est munie d'une pointe 2 à son extrémité inférieure et qui se prolonge à sa partie supérieure par une tête de marquage 3. La tige 1 comprend une zone inférieure 4 ayant une section cruciforme comme représentée sur la Fig. 4, cette zone inférieure comprend essentiellement deux bras 5 et 6 qui s'étendent longitudinalement et dont les axes des sections sont perpendiculaires. Leurs bouts sont arrondis et ils se raccordent par des zones arrondies. Le bras 5 s'étend longitudinalement jusqu'à la tête de marquage 3 avec une largeur progressivement croissante en direction de la tête de marquage 3. Le second bras 6 qui s'étend dans la zone inférieure 4 s'estompe progressivement dans une zone intermédiaire 7 pour disparaître totalement dans la zone supérieure 8.

Ainsi dans la zone supérieure 8 comme représenté sur la Fig. 2 la section de la tige 1 est de forme rectangulaire applatie tandis que dans la zone intermédiaire 7 tel que représenté sur la Fig. 3 la section est de forme générale rectangulaire mais possède deux bossages 9 de forme arrondie au centre des deux faces principales. En outre comme cela paraît sur la Fig. 3 l'épaisseur de la tige rectangulaire dans la zone intermédiaire 7 est légèrement plus élevée que l'épaisseur de la tige dans la zone supérieure 8.

Ainsi la tige présente trois zones ayant des rigidités distinctes. La zone inférieure 4 munie de la pointe 2 qui est destinées à être enfoncée dans le sol possède une rigidité suffisante pour permettre un tel enfoncement. La zone intermédiaire 7 possède une rigidité légèrement plus faible que la zone inférieure 4 tandis que dans la zone supérieure 8 la rigidité devient nettement plus faible.

Comme représenté sur la Fig. 1 la zone supérieure 8 se prolonge par une tête de marquage 3 constituée par une plaque de forme générale circulaire présentant une nervure périphérique 11 et une nervure longitudinale 12 dans l'axe de la tige. Ces nervures servent de renforcement à la plaque circulaire en permettant ainsi une diminution de la quantité de matière plastique nécessaire pour confectionner cette tête. L'épaisseur de cette tête est toutefois réglée de telle façon que la rigidité de cette tête ne soit pas supérieure à celle de la zone supérieure de la tige 1. Sur la face plane 14 de la tête 3 peuvent être apposés des marques tandis sur l'autre face 13 peuvent être apposés par exemple des supports publicitaires ou toute autre indication résantant un avantage quelconque à l'utilisation de ce dispositif.

En variante la zone 8 peut être supprimée et la tige 1 ne comporte alors qu'une zone inférieure 4 et une zone 7 dans laquelle le second bras s'estompe.

Il va de soi que le dispositif selon l'invention peut avoir d'autres formes. En particulier, la tête de marquage peut être de forme rectangulaire ou trapézoïdale.

En outre l'extrémité inférieure peut être munie d'un embout inférieur métallique.

## Revendications

1. Dispositif de jalonnement constitué d'un piquet de matière plastique souple comprenant une tige (1) qui présente une pointe (2) à son extrémité inférieure et qui se prolonge à sa partie supérieure par une tête de marquage (3), caractérisé en ce que ladite tige (1) comprend une zone inférieure (4) de section cruciforme dont un premier bras (5) s'étend longitudinalement jusqu'à la tête de marquage (3), et un second bras (6) qui présente une zone (7) dans laquelle il s'estompe progressivement en direction de la tête de marquage (3), de sorte que la zone supérieure (8) de la tige est moins rigide que la zone inférieure (4), la tête de marquage (3) étant sensiblement plane et s'étendant dans le prolongement du premier bras (5).

2. Dispositif selon la revendication 1, caractérisé en ce que la tête de marquage (3) a une rigidité au plus égale à celle de la zone supérieure (8) de la tige (1).

3. Dispositif selon l'une quelconque des revendications 1 ou 2, caractérisé en ce que le premier bras (5) a une largeur progressivement croissante en direction de la tête de marquage (3).

4. Dispositif selon l'une quelconque des revendications 1 à 3, caractérisé en ce que la matière plastique constituant l'ensemble du piquet est une polyoléfine.

5. Dispositif selon la revendication 4, caractérisé en ce que la polyoléfine a une densité de 0,90 à 0,96 et une résistance à la traction de $8.10^6$ Pa à $35.10^6$ Pa.

## Patentansprüche

1. Vorrichtung zur Markierung, die aus einem Markierstab aus biegsamem Kunststoff mit einem Schaft (1) besteht, der eine Spitze (2) an seinem unteren Ende aufweist und sich an seinem oberen Ende durch einen Markierungskopf (3) verlängert, dadurch gekennzeichnet, daß der Schaft (1) eine untere Zone (4) kreuzförmigen Querschnitts aufweist, wovon sich ein erster Arm (5) längs bis zum Markierungskopf (3) erstreckt und ein zweiter Arm (6) eine Zone (7) aufweist, in der er fortlaufend in Richtung des Markierungskopfes (3) derart ausläuft, daß die obere Zone (8) des Schafts weniger steif als die untere Zone (4) ist, wobei der Markierungskopf (3) im wesentlichen eben ist und sich in der Verlängerung des ersten Arms (5) erstreckt.

2. Vorrichtung nach dem Anspruch 1, dadurch gekennzeichnet, daß der Markierungskopf (3) eine derjenigen der oberen Zone (8) des Schafts (1) höchstens gleiche Steifheit hat.

3. Vorrichtung nach irgendeinem der Ansprüche 1 oder 2, dadurch gekennzeichnet, daß der erste Arm (5) eine in Richtung des Markierungskopfs (3) fortlaufend wachsende Breite hat.

4. Vorrichtung nach irgendeinem der Ansprüche 1 bis 3, dadurch gekennzeichnet, daß das die Gesamtheit des Markierstabes bildende Kunststoffmaterial ein Polyolefin ist.

5. Vorrichtung nach dem Anspruch 4, dadurch gekennzeichnet, daß das Polyolefin eine Dichte von 0,90 bis 0,96 und eine Zugfestigkeit von $8.10^6$ Pa bis $35.10^6$ Pa hat.

## Claims

1. Device for marking out land constituted by a stake made from flexible plastics material and having a rod (1), which is provided at its lower end with a point (2) and which is extended in its upper part by a marker head (3), characterized in that said stem (1) comprises a lower cruciform section area (4), whereof a first arm (5) extends longitudinally upto the marker head (3) and a second arm (6) having an area (7) widening progressively in the direction of the marker head (3), in such a way that the upper area (8) of the stem is less rigid than the lower area (4), the marker head (3) being substantially planar and extending in the extension of the first arm (5).

2. Device according to claim 1, characterized in that the rigidity of the marker head (3) is at the most equal to that of the upper area (8) of stem (1).

3. Device according to either of the claims 1 and 2, characterized in that the width of the first arm (5) increases progressively towards the marker head (3).

4. Device according to any one of the claims 1 to 3, characterized in that the plastics material from which the complete stake is made is a polyolefin.

5. Device according to claim 4, characterized in that the density of the polyolefin is 0.90 to 0.96 and its tensile strength $8.10^6$ to $35.10^6$ Pa.

FIG.1

FIG.5

FIG.2

FIG.3

FIG.4